# FASCICULE DE BREVET EUROPEEN

(11) **EP 1 027 239 B1**
(45) Date de publication et mention de la délivrance du brevet: **10.03.2004**
(21) Numéro de dépôt: 98950150.7
(22) Date de dépôt: 16.10.1998
(51) Int. Cl.: B60T 8/00, B60K 31/04

(54) **SYSTEME DE FREINAGE ET VEHICULE AUTOMOBILE COMPORTANT UN DISPOSITIF DE REGULATION AUTOMATIQUE DE LA DISTANCE**
BREMSANLAGE UND KRAFTFAHRZEUG MIT VORRICHTUNG ZUR AUTOMATISCHEN ABSTANDSREGELUNG
BRAKE SYSTEM AND MOTOR VEHICLE COMPRISING A DEVICE FOR AUTOMATICALLY ADJUSTING DISTANCE

(30) Priorité: 20.10.1997 FR 9713087; 20.10.1997 FR 9713088
(43) Date de publication de la demande: 16.08.2000
(73) Titulaire: Renault s.a.s., 92100 Boulogne Billancourt (FR)
(72) Inventeur: TOFFOLO, Gabriel, F-92500 Rueil-Malmaison (FR); BAUJARD, Annick, F-92250 La Garenne Colombes (FR)
(86) Numéro de dépôt international: PCT/FR1998/002222
(87) Numéro de publication internationale: WO 1999/020508

(56) Documents cités:
- WO-A-96/40534
- DE-A- 4 316 896
- DE-A- 19 534 562
- DE-A- 19 535 623
- US-A- 5 314 037

## Description

L'invention concerne un système de freinage pour véhicule automobile comportant un mode de freinage assisté. Elle se rapporte également à un véhicule automobile comportant un dispositif de régulation automatique de la vitesse agissant sur un organe de freinage du véhicule.

L'invention concerne en premier lieu un système de freinage pour un véhicule automobile du type comportant un organe de freinage qui impose au véhicule une décélération variable, du type dans lequel le conducteur du véhicule commande la décélération imposée par l'organe de freinage en actionnant une pédale de frein, et du type comportant une unité d'assistance au freinage qui, dans une situation d'urgence déterminée en fonction de l'actionnement de la pédale par le conducteur, est susceptible de commander l'organe de freinage selon un mode de freinage automatique d'urgence au cours duquel la décélération est maximale.

L'invention se rapporte par ailleurs à un véhicule automobile comportant un dispositif de régulation automatique de la vitesse, du type dans lequel le dispositif comporte des moyens qui permettent au conducteur de provoquer une accélération ou une décélération du véhicule en agissant sur la commande d'un moteur d'entraînement du véhicule, suite à quoi le dispositif maintient le véhicule à une vitesse de consigne imposée par le conducteur, et du type dans lequel le conducteur peut provoquer une décélération du véhicule en commandant un organe de freinage.

Depuis de nombreuses années déjà, il existe des véhicules dont le système de freinage comporte un système d'anti-blocage qui permet d'obtenir une décélération maximale du véhicule sans que les roues ne se bloquent, ce qui permet de conserver la maîtrise de la trajectoire du véhicule en cas de freinage violent. Le système d'anti-blocage permet donc au conducteur, lorsqu'il juge la situation urgente, d'exercer une pression très importante sur la pédale de frein sans avoir le souci de moduler cette pression et en ayant donc pour seule préoccupation de ralentir le plus vite possible son véhicule.

Cependant, des études ont montré que souvent, en situation d'urgence, les conducteurs n'exploitent pas au maximum les capacités du système de freinage car ils n'exercent pas sur la pédale une pression suffisante pour obtenir la décélération maximale. Ceci s'explique aisément sur les véhicules dépourvus d'anti-blocage, car le conducteur cherche alors à conserver la maîtrise de la trajectoire de son véhicule, mais on s'est aperçu que cela était aussi vrai pour les conducteurs de véhicules munis d'un système d'anti-blocage.

Or, dans certaines situations, ce freinage insuffisant de la part du conducteur fait qu'il ne peut éviter l'obstacle qui le force à ralentir.

Dans le but d'apporter une première solution à ce problème, il a déjà été proposé des systèmes de freinage dans lesquels un calculateur peut, dans une situation d'urgence, provoquer un freinage automatique au cours duquel le véhicule subit la décélération maximale qui est permise par les performances intrinsèques de l'organe de freinage et par l'adhérence de la chaussée. Le freinage automatique d'urgence ainsi réalisé consiste à maintenir une force de freinage telle que les roues sont toujours en limite de blocage.

Par la publication DE-A-195 623, on connaît notamment un système d'assistance en freinage, susceptible de commander les freins du véhicule selon un mode de freinage automatique, dans des situations critiques.

Pour détecter une situation d'urgence, on se sert généralement d'un capteur qui mesure le degré d'enfoncement de la pédale de frein et/ou la vitesse d'enfoncement de cette pédale par le conducteur.

Généralement, on estime qu'il y a situation d'urgence lorsque la pédale a été enfoncée au delà d'une course de seuil, à une vitesse supérieure à une vitesse de seuil. Éventuellement, on peut aussi tenir compte de la durée de l'actionnement de la pédale par le conducteur, ou d'autres paramètres encore.

Toutefois, de tels dispositifs ne donnent pas toujours entière satisfaction et conduisent parfois à un freinage excessif du véhicule.

Cela peut être non seulement désagréable pour le conducteur du véhicule et pour ses passagers, mais cela peut aussi être à l'origine de collisions, notamment lorsque le véhicule équipé d'un tel système est suivi d'un autre véhicule qui lui est dépourvu d'un tel système.

Par la publication WO-A-99/40534, on connaît par ailleurs un véhicule automobile comportant un dispositif de régulation automatique de sa vitesse capable d'agir sur l'organe de freinage pour assurer une décélération du véhicule lorsque sa vitesse instantanée est supérieure à une vitesse de consigne.

Enfin, on connaît également des systèmes anti-collision qui, indépendamment de la volonté du conducteur, empêchent que le véhicule ne puisse percuter un obstacle présent devant lui. A cet effet, les systèmes anti-collision comportent des moyens de détection de l'environnement du véhicule, dirigés notamment vers l'avant, qui ont pour fonction d'analyser la présence d'obstacle en avant du véhicule.

En fonction notamment de la distance entre l'obstacle détecté et le véhicule, de la vitesse relative entre l'obstacle et le véhicule, mais aussi en fonction de la trajectoire du véhicule, le système anti-collision peut alors agir sur le système de freinage en vue de ralentir le véhicule.

En théorie, les systèmes anti-collision ont pour objet d'éliminer tout risque d'accident. En pratique, la mise en oeuvre de ces systèmes est particulièrement complexe et il est peu probable qu'ils puissent être intégrés dans un futur proche sur les véhicules de série. En effet, les capteurs de détection, du type radar, télémètre infrarouge ou télémètre laser, ne font que renvoyer une image "floue" de l'environnement et, dans certaines situations, il est difficile pour les calculateurs chargés d'analyser ces images d'interpréter la nature réelle ou pas des obstacles détectés.

L'invention a donc pour objet de proposer un système d'assistance au freinage qui permet de suppléer à un freinage insuffisant imposé par le conducteur sans pour autant déclencher dans chaque cas un freinage automatique d'urgence particulièrement violent.

Dans ce but, l'invention propose un système de freinage du type décrit précédemment, caractérisé en ce que le système de freinage comporte un dispositif de détection d'obstacle, et en ce que, lorsque le conducteur actionne la pédale de frein et qu'un obstacle est détecté, l'unité d'assistance commande l'organe de freinage selon un mode de freinage assisté au cours duquel la décélération est suffisante pour assurer l'immobilisation du véhicule avant l'obstacle.

Selon d'autres caractéristiques de l'invention :
- l'unité de freinage assisté comporte un calculateur pour déterminer en permanence la décélération suffisante pour assurer l'immobilisation du véhicule avant un obstacle détecté ;
- le mode de freinage assisté n'est mis en oeuvre que lorsque la décélération suffisante est supérieure à une décélération de seuil ;
- la décélération de seuil est réglable ;
- la décélération de seuil est déterminée de manière auto-adaptative par le calculateur ;
- le mode de freinage assisté n'est mis en oeuvre que lorsque la pédale est actionnée au-delà d'une course de seuil ;
- le mode de freinage assisté n'est mis en oeuvre que lorsque la décélération - commandée par le conducteur est inférieure à la décélération suffisante ;
- le mode de freinage assisté est interrompu lorsque le conducteur cesse d'actionner la pédale de frein ;
- le mode de freinage assisté est interrompu lorsque plus aucun obstacle n'est détecté ;
- le mode de freinage automatique d'urgence est mis en oeuvre lorsque, dans une situation d'urgence, aucun obstacle n'est détecté ;
- lorsqu'un obstacle est détecté au cours d'un freinage automatique d'urgence, l'unité de freinage bascule vers le mode de freinage assisté; et
- une situation d'urgence est détectée lorsque la vitesse d'actionnement de la pédale de frein par le conducteur dépasse une vitesse de seuil.

Dans les dispositifs de régulation de vitesse connus jusqu'à présent, le conducteur peut, lorsqu'il a atteint une vitesse donnée, enclencher le dispositif de manière à ce que celui-ci impose au véhicule de conserver cette vitesse en agissant sur la commande du moteur d'entraînement du véhicule, c'est-à-dire, dans le cas d'un moteur à combustion interne, sur le mélange carburé qui alimente le moteur.

A partir de cette première vitesse de consigne, le conducteur peut., généralement à l'aide de deux touches de commande, diminuer ou augmenter la vitesse de consigne, le dispositif de régulation automatique de la vitesse agissant alors sur le mélange carburé pour amener la vitesse réelle instantanée du véhicule à la nouvelle vitesse de consigne. Si la nouvelle vitesse de consigne est supérieure à l'ancienne, le dispositif de régulation provoque l'alimentation du moteur avec un mélange carburé plus riche en carburant. Au contraire, si la nouvelle vitesse de consigne est inférieure à l'ancienne vitesse de consigne, le dispositif de régulation provoque l'alimentation du moteur avec un mélange carburé plus pauvre en carburant.

Toutefois, dans les dispositifs connus de régulation de vitesse, le conducteur ne peut pas, à l'aide des seules touches de commande des dispositifs de régulation, provoquer une décélération du véhicule qui soit supérieure à la décélération correspondant à la coupure d'alimentation du moteur. La seule force de freinage susceptible d'être utilisée est en effet le frein moteur.

De la sorte, dans le flux de la circulation, le conducteur est très souvent obligé de freiner le véhicule en utilisant l'installation principale de freinage du véhicule qui est généralement constituée par des freins à disques ou à tambours logés dans les roues du véhicule. Or, l'utilisation de cette installation principale, généralement commandée par une pédale de frein, interrompt toute action du dispositif de régulation de la vitesse. Le conducteur est alors amené ultérieurement à ré-enclencher le dispositif en indiquant à celui-ci une nouvelle vitesse de consigne. Éventuellement, certains dispositifs prévoient une commande spécifique qui permet de réinitialiser le dispositif à la même vitesse de consigne que lors de l'utilisation précédente.

Ainsi, avec les dispositifs selon l'état de la technique, le conducteur est amené à de nombreuses reprises à passer d'un mode de régulation automatique de la vitesse au mode "manuel" dans lequel il commande la vitesse du véhicule en agissant sur la pédale d'accélérateur et sur la pédale de frein du véhicule.

L'invention a donc pour objet de proposer une nouvelle conception d'un dispositif de régulation automatique de la vitesse qui permette, dans de nombreux cas, d'éviter un tel va-et-vient entre les modes automatique et manuel.

Dans ce but, l'invention propose un véhicule automobile du type décrit précédemment, caractérisé en ce que l'organe de freinage peut également être actionné par le dispositif de régulation de vitesse lorsque la vitesses instantanée du véhicule est supérieure à la vitesse de consigne, et par une unité d'assistance au freinage en situation d'urgence.

Selon d'autres caractéristiques de l'invention :
- le dispositif de régulation agit sur l'organe de freinage lorsque la différence entre la vitesse instantanée du véhicule et la vitesse de consigne est supérieure à un premier niveau de seuil ;
- le dispositif de régulation commande l'organe de freinage de telle sorte que celui-ci impose au véhicule une décélération qui est déterminée par le dispositif de régulation en fonction de la vitesse instantanée du véhicule et en fonction de la différence entre la vitesse instantanée du véhicule et la vitesse de consigne.
- le dispositif de régulation commande l'organe de freinage de telle sorte que celui-ci impose au véhicule une décélération qui augmente sensiblement proportionnellement à l'augmentation de la différence entre la vitesse instantanée du véhicule et la vitesse de consigne ;
- la décélération commandée par l'organe de régulation ne peut excéder une décélération limite qui est le produit de la décélération maximale permise par l'organe de freinage par un coefficient d'atténuation inférieur à 1 ;
- le coefficient d'atténuation diminue lorsque la vitesse instantanée du véhicule augmente ;
- lorsque, au cours d'une décélération commandée par le dispositif de régulation agissant sur l'organe de freinage, le conducteur diminue la différence entre la vitesse instantanée du véhicule et la vitesse de consigne en augmentant cette dernière à une nouvelle valeur de consigne, le dispositif de régulation agit sur l'organe de freinage de telle sorte que celui-ci impose au véhicule une nouvelle valeur de décélération qui est inférieure d'au moins un incrément à la valeur de décélération précédente ;
- lorsque, au cours d'une décélération commandée par le dispositif de régulation agissant sur l'organe de freinage, le conducteur diminue la différence entre la vitesse instantanée du véhicule et la vitesse de consigne en augmentant cette dernière à une nouvelle valeur de consigne, le dispositif de régulation cesse d'agir sur l'organe de freinage lorsque la différence entre la vitesse instantanée du véhicule et la vitesse de consigne devient inférieure à un second niveau de seuil ;
- le second niveau de seuil de différence entre la vitesse instantanée du véhicule et la vitesse de consigne est supérieur au premier niveau de seuil ;
- le conducteur commande le dispositif de régulation à l'aide de deux moyens d'interface dont un premier permet d'augmenter la vitesse de consigne et dont un second permet de diminuer la vitesse de consigne ;
- le dispositif comporte un moyen de visualisation de la vitesse de consigne ;
- le moyen de visualisation qui affiche la vitesse de consigne est agencé à proximité d'un second moyen de visualisation de la vitesse instantanée du véhicule ; et
- les deux moyens de visualisation sont de type à affichage analogique.

D'autres caractéristiques et avantages de l'invention apparaîtront à la lecture de la description détaillée qui suit pour la compréhension de laquelle on se reportera aux dessins annexés dans lesquels :
- la figure 1 est un schéma fonctionnel illustrant les principaux composants d'un système de freinage conforme aux enseignements de l'invention ; et
- la figure 2 est un organigramme illustrant le fonctionnement du système de freinage selon l'invention.
- la figure 3 est un schéma fonctionnel illustrant les principaux composants d'un dispositif de régulation de vitesse conforme aux enseignements de l'invention ;
- la figure 4 est une vue illustrant une partie du poste de conduite d'un véhicule automobile conforme aux enseignements de l'invention ;
- la figure 5 est un graphe illustrant le niveau de décélération imposé au véhicule, par l'organe de freinage lorsqu'il est commandé par le dispositif de régulation automatique selon l'invention, en fonction de la différence entre la vitesse instantanée du véhicule et la vitesse de consigne imposée par le conducteur ; et
- la figure 6 est un graphe illustrant les variations d'un coefficient d'atténuation qui permet de déterminer une décélération limite susceptible d'être imposée au véhicule, par rapport à une décélération maximale permise par l'organe de freinage, en fonction de la vitesse instantanée du véhicule.

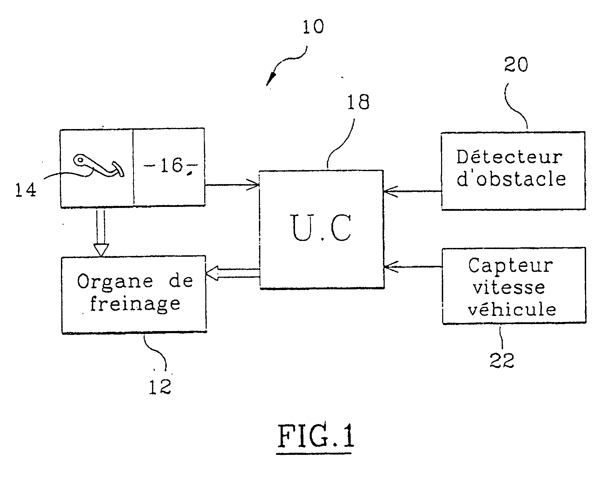

On a illustré sur la figure 1 un schéma représentant les interactions entre différents composants d'un système de freinage 10 conforme aux enseignements de l'invention.

Le système de freinage 10 comporte un organe de freinage 12 qui regroupe l'ensemble du dispositif mécanique, hydraulique, électrique, et/ou électronique permettant de ralentir un véhicule automobile. L'organe de freinage 12 peut donc par exemple comporter des freins à disque ou à tambour, des circuits d'actionnement hydrauliques ou électriques et éventuellement des unités de contrôle de type électronique chargées par exemple de réaliser la fonction d'anti-blocage du freinage.

Bien entendu, l'organe de freinage 12 peut, par exemple dans les systèmes de freinage pour véhicule poids lourds, comporter des dispositifs additionnels ou autres tels que des freins de type électromagnétique.

Cet organe de freinage 12 est donc apte à provoquer un certain niveau de décélération du véhicule.

Le conducteur du véhicule agit sur l'organe de freinage 12 par exemple par l'intermédiaire d'une pédale de frein 14. En fonction de la manière dont le conducteur actionne la pédale 14, l'organe de freinage 12 provoque une décélération plus ou moins importante du véhicule.

Comme dans les systèmes de freinage à freinage automatique d'urgence, le système 10 selon l'invention comporte un capteur 16 qui permet de déterminer notamment la position de la pédale 14, c'est-à-dire la course sur laquelle le conducteur a actionné celle-ci. Ce même capteur 16 peut également permettre de déterminer la vitesse d'actionnement de la pédale 14.

Par pédale de frein, il faut entendre tout moyen d'interface entre le conducteur et l'organe de freinage 12 au moyen duquel le conducteur peut commander l'organe de freinage 12 afin que celui-ci impose un niveau de décélération au véhicule. La pédale 14 peut donc prendre la forme d'une pédale classique, mais aussi celle d'un levier actionné à la main, d'un bouton rotatif, ou d'une manette de type "joystick".

Le système de freinage 10 comporte aussi une unité centrale 18 (U.C.), ou calculateur, qui est susceptible, dans certaines situations, de commander l'organe de freinage 12 en vue de lui faire effectuer une décélération du véhicule d'un niveau déterminé.

L'unité centrale 18 reçoit notamment du capteur 16 des informations relatives à l'actionnement de la pédale 14 par le conducteur. Un capteur de vitesse 22 transmet aussi à l'unité centrale 18 les données relatives à la vitesse instantanée du véhicule.

Conformément aux enseignements de l'invention, le système de freinage 10 comporte aussi un détecteur d'obstacle 20. Ce détecteur d'obstacle 20 peut mettre en oeuvre différentes technologies (radar, ultrasons, télémétrie laser) et il permet de renseigner l'unité centrale 18 sur la présence ou non d'obstacles, notamment d'obstacles situés en avant du véhicule.

Grâce à ce détecteur d'obstacle 20, il est possible de déterminer non seulement la présence de l'obstacle et la distance qui le sépare du véhicule, mais aussi la vitesse relative du véhicule par rapport à l'obstacle.

Conformément aux enseignements de l'invention, le système de freinage 10 selon l'invention permet tout d'abord, dans la majorité des cas, au conducteur de maîtriser entièrement de façon autonome le freinage du véhicule. Cependant, dans certaines situations d'urgence, le système de freinage 10 peut mettre en oeuvre un mode de freinage automatique d'urgence qui permet d'obtenir la distance de freinage la plus courte. Enfin, selon l'invention, le système de freinage 10 peut mettre en oeuvre un mode de freinage assisté au cours duquel la décélération est suffisante pour assurer l'immobilisation du véhicule avant que celui-ci ne heurte un obstacle détecté par le détecteur d'obstacle 20.

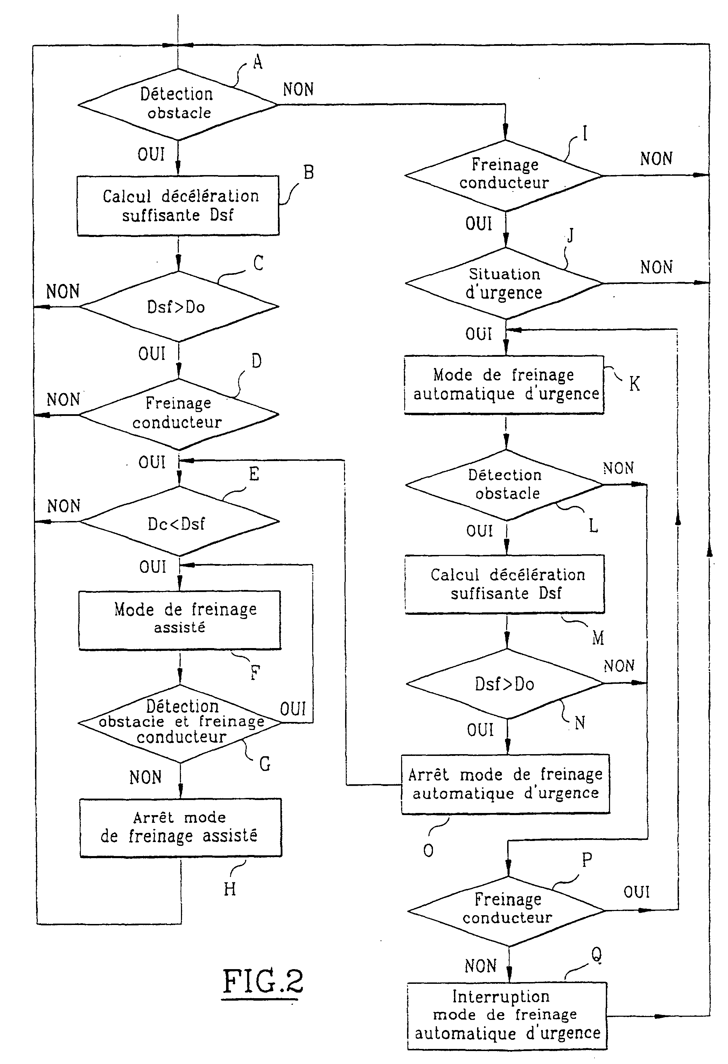

Le fonctionnement du système de freinage 10, selon l'invention va être décrit ci-après plus en détails et en référence à l'organigramme de la figure 2.

Cette logique de commande est exécutée par l'unité centrale 18. A tout instant de fonctionnement du véhicule, l'unité centrale 18 reçoit donc des informations du détecteur d'obstacle 20 qui est susceptible d'informer le système de freinage de la présence ou non d'un obstacle en avant du véhicule. Si un tel obstacle est détecté à l'étape A de l'organigramme de commande, l'unité centrale 18 procède au calcul, à l'étape B, de la décélération minimale suffisante Dsf qu'il suffit d'imposer au véhicule pour l'arrêter avant qu'il ne heurte l'obstacle détecté à l'étape A. Les informations essentielles nécessaires à ce calcul de la décélération suffisante Dsf sont fournies par le détecteur d'obstacle 20, à savoir la distance et la vitesse relative entre le véhicule et l'obstacle, mais d'autres paramètres peuvent aussi être pris en compte tels que ceux relatifs à la vitesse absolue du véhicule, à la trajectoire du véhicule ou aux conditions d'adhérence instantanées.

A l'étape C, l'unité centrale 18 compare la valeur de la décélération suffisante calculée Dsf à une valeur de seuil Do. Si la valeur de Dsf est inférieure à la valeur de seuil Do, la logique de commande est rebouclée à l'étape A. Ainsi, le mode de freinage assisté ne peut être déclenché par l'unité centrale 18 que pour des décélérations ayant déjà atteints un certain niveau.

Le niveau de seuil Do peut être fixe mais on peut aussi prévoir qu'il soit réglable. Dans ce dernier cas, le seuil peut être réglé soit par le conducteur lui-même, en fonction de la sensibilité qu'il veut donner au système, soit de manière auto-adaptative par l'unité centrale 18 notamment en fonction du style de conduite du conducteur et en analysant ses réactions lors des déclenchements précédents du mode de freinage assisté.

Si le niveau de décélération suffisant calculé Dsf est supérieur à la décélération de seuil Do, le système 10 détermine à l'étape D l'enfoncement de la pédale de frein 14 par le conducteur. Il s'agit ici de déterminer si oui ou non le conducteur a l'intention de freiner. Si tel n'est pas le cas, le système retourne à l'étape A.

Ainsi, le mode de freinage assisté n'est déclenché que dans les cas où le conducteur a préalablement manifesté son intention de freiner. Le système selon l'invention diffère donc en cela de manière fondamentale d'un système anti-collision de type connu dans lequel, quelle que soit la réaction du conducteur, le système provoque les actions nécessaires pour assurer l'immobilisation du véhicule.

Ainsi, à l'étape D, le système détecte la volonté du conducteur de freiner, par exemple en détectant, grâce aux capteurs de position de pédale 16, que cette dernière a été actionnée sur une course au moins égale à un certain pourcentage de la course maximale d'actionnement de celle-ci.

Si tel est le cas, le système 10 procède, à l'étape E, à la comparaison de la décélération Dc commandée par le conducteur, qui est une fonction de la course d'actionnement de la pédale 14, avec la décélération suffisante Dsf calculée à l'étape B. La décélération Dc commandée par le conducteur peut par exemple être déduite de la position de la pédale de frein 14 ou de la pression dans un circuit hydraulique de l'organe de freinage 12.

Si la décélération Dc commandée par le conducteur est supérieure à la décélération suffisante Dsf, le système 10 retourne à l'étape A sans action sur l'organe de freinage. Ainsi, dans le système 10 selon l'invention, le conducteur garde la possibilité de freiner plus fort qu'il n'est strictement nécessaire pour arrêter le véhicule avant l'obstacle détecté par le détecteur 20. Cette possibilité est particulièrement utile pour le cas où le conducteur aurait perçu un autre obstacle qui ne serait par exemple pas encore dans le "champ de vision" du détecteur d'obstacle 20.

Si, à l'étape E, le système 10 constate que la décélération commandée Dc par le conducteur est inférieure à la décélération suffisante pour détecter l'obstacle, le système 10 va alors mettre en oeuvre le mode de freinage assisté selon l'invention. Au cours de ce mode de freinage assisté, c'est l'unité centrale 18 qui commande l'organe de freinage 12 pour que celui-ci impose au véhicule une décélération égale à la décélération suffisante calculée Dsf.

Tout au long du freinage assisté, la valeur de la décélération suffisante Dsf est recalculée de façon dynamique de manière à tenir compte par exemple de l'apparition dans le champ de vision du détecteur 20 d'un nouvel obstacle.

Comme on peut le voir à l'étape G, le freinage assisté se poursuit tant que le détecteur 20 "voit" un obstacle et tant que le conducteur maintient la pédale de frein 14 enfoncée. Dès que l'une de ces deux conditions n'est plus remplie, on peut voir à l'étape H que le système arrête le mode de freinage assisté et retourne à l'étape A. Une autre cause d'interruption du freinage assisté peut par exemple être une réaction du conducteur telle que la décélération Dc commandée par le biais de l'enfoncement de la pédale 14 devienne supérieure à la décélération suffisante Dsf, auquel cas le système 10 réagit de manière à rendre le contrôle du freinage au conducteur.

Conformément aux enseignements de l'invention, on peut donc constater que le mode de freinage assisté ne peut être déclenché qu'en présence d'un obstacle détecté par le détecteur 20.

Si aucun obstacle n'est détecté par le détecteur 20, on peut voir sur la figure que le système passe directement de l'étape A à l'étape I.

A l'étape I, le système détermine si oui ou non le conducteur effectue un freinage. Cette détection peut se faire suivant les mêmes critères que ceux vus pour l'étape D.

Si le conducteur n'actionne pas la pédale de frein, le système retourne alors directement à l'étape A, la boucle aller-retour entre les étapes A et I étant la boucle qui correspond au fonctionnement normal du véhicule lorsqu'aucun obstacle n'est détecté et qu'aucun freinage n'est demandé par le conducteur.

Si à l'étape I le système détecte une volonté du conducteur d'effectuer un freinage, il détermine, à l'étape J, si oui ou non le conducteur a lui-même analysé la situation comme étant une situation d'urgence. Cette détection peut par exemple se faire en déterminant, grâce aux capteur de position 16, la vitesse d'enfoncement de la pédale 14. Si cette vitesse est inférieure à une vitesse de seuil, le système 10 en déduira que le conducteur souhaite réaliser un freinage modéré sans qu'il n'y ait d'urgence particulière, et le système 10 retourne alors à l'étape A sans déclencher d'action particulière au niveau de l'organe de freinage 12.

Dans le cas contraire, lorsque la vitesse d'actionnement de la pédale 14 par le conducteur est supérieure au seuil prédéterminé, le système passe à l'étape K dans laquelle il commande l'organe de freinage 12 selon un mode de freinage automatique d'urgence au cours duquel l'organe de freinage 12 impose au véhicule la décélération maximale permise notamment en fonction des performances intrinsèques de l'organe de freinage 12 et des conditions d'adhérence. Bien entendu, pour détecter une situation d'urgence, on peut aussi tenir compte de la durée de l'actionnement de la pédale par le conducteur, ou d'autres paramètres encore.

Toutefois, comme on peut le voir à l'étape L, tout au long du freinage automatique d'urgence, le système continue de recevoir les informations en provenance du détecteur d'obstacle 20. En l'absence d'obstacle détecté, l'opération passe directement à l'étape P où l'on peut voir que le mode de freinage automatique d'urgence est conservé tant que le conducteur continue de solliciter un freinage. Cette condition peut par exemple être vérifiée tant que l'enfoncement de la pédale par le conducteur demeure supérieur à un niveau de seuil. Toutefois, d'autres paramètres peuvent aussi être pris en compte. Si le conducteur cesse d'actionner la pédale 14, le système interrompt, à l'étape Q, le mode de freinage automatique d'urgence et il retourne à l'étape A.

En revenant à l'étape L, il se peut que, au cours d'un freinage automatique d'urgence, qui a été déclenché alors qu'aucun obstacle n'était détectée par le détecteur 20, un obstacle apparaisse dans le "champ de vision" du détecteur 20. Alors, de la même manière qu'aux étapes B et C, le système 10 détermine la décélération suffisante Dsf permettant au véhicule de s'arrêter avant l'obstacle et, à l'étape N, il compare la décélération suffisante Dsf à une valeur de seuil Do.

Si la décélération suffisante Dsf est inférieure à une décélération de seuil Do, le système 10 passe directement à l'étape P et le freinage automatique d'urgence est maintenu tant que le conducteur continue de freiner.

Au contraire, si la décélération suffisante Dsf est supérieure à la décélération de seuil Do, le système 10 interrompt le freinage automatique d'urgence (étape O) et se reboucle au niveau de l'étape E pour mettre en oeuvre le mode d'assistance au freinage, tel que décrit plus haut, en tenant compte de l'obstacle détecté par le détecteur 20.

Le système de freinage 10 selon l'invention est donc particulièrement performant et il procure surtout au conducteur un grand confort et une grande sécurité d'utilisation.

En effet, en combinant une détection de situation d'urgence par le biais des réactions du conducteur et en combinant cette information avec celle fournie par le détecteur d'obstacle 20, le système de freinage 10 évite le déclenchement intempestif d'opérations de freinage non justifiées et, dans de nombreux cas, peut imposer une décélération supérieure à celle commandée par le conducteur, dans le cas où cette dernière est insuffisante, sans pour autant déclencher une décélération maximale.

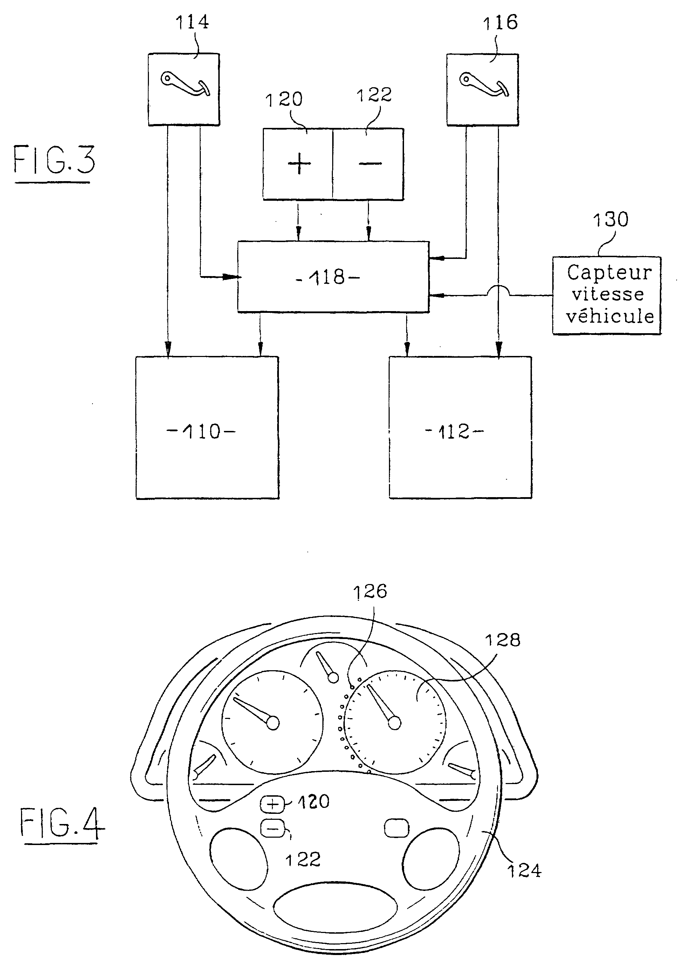

On a illustré sur la figure 3 un dispositif de régulation automatique de la vitesse d'avancement d'un véhicule automobile qui est entraîné par un moteur 110, par exemple à combustion interne, et qui est susceptible d'être ralenti par un organe principal de freinage 112 comportant par exemple des freins à disques ou à tambours logés dans les roues du véhicule. De manière connue, le conducteur du véhicule détermine la vitesse du véhicule en commandant d'une part le moteur 110 à l'aide d'une pédale d'accélérateur 114 et d'autre part en commandant l'organe de freinage 112 à l'aide d'une pédale de frein 116.

Dans un véhicule comportant des pédales 114, 116 de type classique mais le conducteur peut également agir sur le moteur 110 et sur l'organe de freinage 112 par tout autre moyen d'interface tel que des leviers ou des manettes de type "joystick".

Ce dispositif de régulation de vitesse automatique selon l'invention comporte une unité centrale de gestion 118 qui est elle aussi susceptible de commander à la fois le moteur 110 et l'organe de freinage 112. L'unité centrale 118 reçoit de la pédale d'accélérateur 114 et de la pédale de frein 116 des informations quant à leur actionnement par le conducteur. Un capteur de vitesse 130 transmet aussi à l'unité centrale 118 les données relatives à la vitesse instantanée du véhicule.

Par ailleurs, le conducteur du véhicule peut déterminer une vitesse de consigne Vc à laquelle il souhaite que le dispositif de régulation maintienne le véhicule. Le conducteur peut imposer une augmentation ou une diminution de la vitesse de consigne Vc à l'aide de deux touches de commande 120, 122, la première manipulation de la touche "plus" 120 déterminant par exemple une vitesse de consigne initiale égale à la vitesse instantanée V du véhicule lorsque le conducteur appuie sur cette touche.

D'autres systèmes d'entrée de la vitesse de consigne Vc peuvent être imaginés tels que par exemple l'entrée d'une vitesse à l'aide d'un chiffre composé sur un clavier numérique.

On a illustré sur la figure 3 le cas où les pédales d'accélérateur 114 et de frein 116 peuvent agir respectivement sur le moteur 110 et le frein 112 de manière parallèle à l'action de l'unité centrale 118 sur ces deux organes. Toutefois, on peut aussi réaliser l'invention dans le cas où l'une au moins des pédales 114, 116 n'ont plus d'action directe sur les organes respectifs et sont uniquement reliées à une unité centrale de commande à la compétence élargie. Cette conception est généralement désignée sous le terme de "commandes électriques".

Comme on peut le voir sur la figure 4, les touches "plus" et "moins" 120, 122 sont avantageusement implantées sur un volant 124 de colonne de direction du véhicule et le poste de conduite peut aussi être muni de moyens de visualisation 126 de la vitesse de consigne Vc imposée par le conducteur. Dans l'exemple de réalisation illustré à la figure 4, le moyen de visualisation 126 est constitué d'une série de diodes électroluminescentes implantées autour d'un indicateur de vitesse à affichage analogique à aiguille 128. Les diodes sont réparties angulairement à intervalles réguliers autour de l'axe de rotation de l'aiguille de l'indicateur 128, en regard d'une série de marques indicatives de différents niveaux de vitesse du véhicule.

Avec un tel système d'affichage analogique, dans lequel la grandeur mesurée est représentée sous forme graphique et non pas sous la forme d'un chiffre, le conducteur peut avoir une représentation très parlante, matérialisée par un arc angulaire, de l'écart entre la vitesse instantanée V du véhicule et la vitesse de consigne Vc qu'il donne au dispositif de régulation. Cela est d'autant plus important que, dans le système selon l'invention, cet écart détermine l'intensité du freinage imposé par le dispositif de régulation ainsi que cela apparaîtra dans la description du fonctionnement qui suit.

Lorsque le véhicule a atteint une certaine vitesse, le conducteur peut enclencher le dispositif de régulation de telle manière que celui-ci prenne en charge le maintien de la vitesse du véhicule à ce niveau de vitesse qui devient alors la vitesse de consigne Vc. Ainsi, tant que le conducteur n'exerce aucune action ni sur les pédales 114, 116, ni sur les touches de commande 120, 122, le dispositif de régulation maintient la vitesse en agissant sur la commande du moteur du véhicule, c'est-à-dire, dans le cas d'un moteur à combustion interne, notamment sur l'ouverture du papillon d'admission et sur la richesse du mélange carburé.

Si le conducteur souhaite que le véhicule roule à une vitesse supérieure, il peut augmenter la vitesse de consigne Vc à l'aide de la touche "plus" 120, l'unité centrale 18 agissant alors sur le moteur 110 pour accélérer le véhicule jusqu'à ce qu'il atteigne la nouvelle vitesse de consigne.

Au contraire, s'il souhaite que le véhicule avance à une vitesse légèrement inférieure, le conducteur peut diminuer la vitesse de consigne Vc à l'aide de la touche "moins" 122, le dispositif de régulation pouvant, dans la plupart des cas, ramener le véhicule à cette nouvelle vitesse de consigne simplement en agissant sur le moteur 110.

Toutefois, dans certains cas, le conducteur peut vouloir réduire de manière importante la vitesse instantanée V du véhicule en un temps relativement bref.

Dans ce cas, la simple action sur le moteur 110, qui correspond à celle que l'on obtient en mode manuel lorsque le conducteur lève le pied de la pédale d'accélérateur 114, peut être insuffisante. Aussi, selon l'invention1 12 du véhicule pour imposer à celui une décélération suffisante permettant d'atteindre la nouvelle vitesse de consigne Vc dans un délai relativement bref.

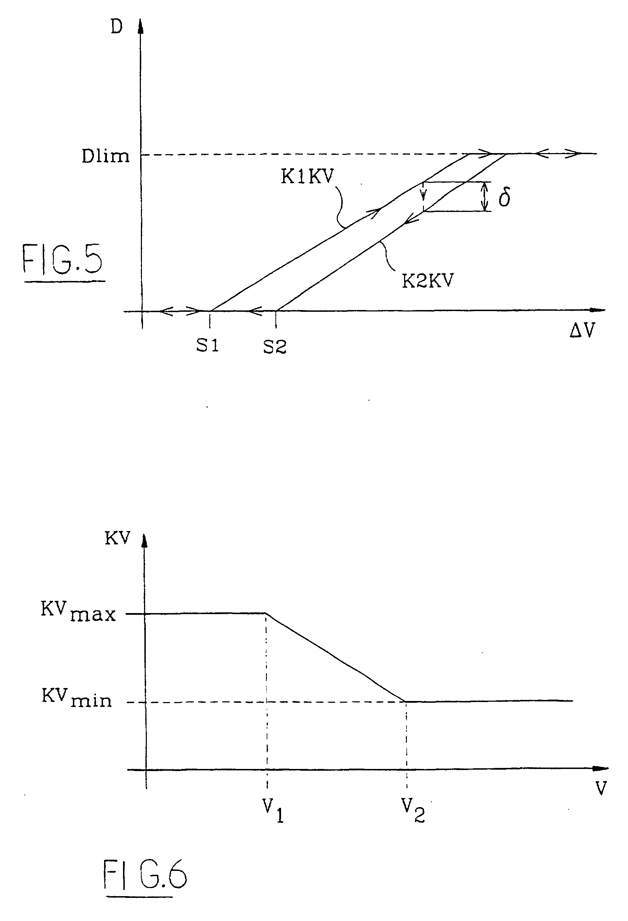

Comme on peut le voir sur la figure 5, le niveau de décélération du véhicule qui est imposé par l'organe de freinage 112 lorsqu'il est commandé par le dispositif de régulation de vitesse est déterminé notamment en fonction de la différence ΔV entre la vitesse instantanée V du véhicule et la nouvelle vitesse de consigne Vc imposée par le conducteur.

Ainsi, lorsque cette différence de vitesse ΔV est inférieure à un premier niveau de seuil S1, le dispositif de régulation n'agit que sur la commande du moteur 110 pour décélérer le véhicule. Au-delà de ce seuil S1, le dispositif de régulation commande l'organe de freinage 112 de telle manière que celui-ci impose une décélération qui augmente proportionnellement à la différence de vitesse ΔV selon un rapport de proportionnalité constant égal au produit de deux facteurs K1 et KV.

Toutefois, il est prévu que le dispositif de régulation ne peut commander l'organe de freinage 112 de manière à ce qu'il impose au véhicule une décélération supérieure à une décélération limite Dₗᵢₘ. Cette décélération limite est égale au produit de la décélération maximale Dₘₐₓ susceptible d'être imposée par l'organe de freinage 112 au véhicule par le facteur KV qui est appelé coefficient d'atténuation et qui est donc compris entre 0 et 1.

Dans la pratique, le conducteur qui roule à un premier niveau de vitesse de consigne et qui souhaite ralentir le véhicule va donc appuyer sur la touche "moins" 122 de manière à provoquer une diminution de la vitesse de consigne. Au fur et à mesure que la différence ΔV entre la vitesse instantanée V du véhicule et la vitesse de consigne Vc augmente, l'intensité du freinage imposé par le dispositif de régulation augmente donc selon le coefficient de proportionnalité K1*KV.

Toutefois, il est possible que le conducteur se rende compte qu'il a commandé une nouvelle vitesse de consigne trop faible qui a entraîné de la part du dispositif de régulation un freinage trop intense. Dans ce cas, le conducteur peut de nouveau augmenter la vitesse de consigne Vc en appuyant sur la touche de commande "plus" 120. Le conducteur va donc provoquer alors la diminution de la différence ΔV entre la vitesse instantanée V et la vitesse de consigne Vc.

Selon un aspect de l'invention, il est alors prévu, comme on peut le voir sur la figure 5, qu'au premier appui sur la touche de commande "plus" 120, l'intensité du freinage, c'est-à-dire la décélération imposée par l'organe de freinage 112 au véhicule, chute "brutalement" d'un certain niveau égal à un incrément minimal δ. Cet incrément δ peut par exemple de l'ordre de 1m/s².

Si, suite à ce premier appui sur la touche de commande "plus" 120, le conducteur continue d'augmenter la nouvelle vitesse de consigne Vc, c'est-à-dire de réduire la différence ΔV entre la vitesse instantanée V et la vitesse de consigne Vc, l'intensité de la décélération imposée par l'organe de freinage 112 sera alors commandée de manière à diminuer proportionnellement à la diminution de la différence de vitesse ΔV selon un nouveau coefficient de proportionnalité K2*KV.

Par ailleurs lorsque le conducteur du véhicule continue d'augmenter la valeur de consigne en réduisant ainsi la différence de vitesse ΔV, le dispositif de régulation cesse d'agir sur l'organe de freinage 112 dès que la différence de vitesse ΔV est inférieure à un second niveau de seuil S2 supérieur au premier niveau de seuil S1.

Éventuellement, le coefficient K2 peut être identique au coefficient K1, auquel cas les deux lois de proportionnalité entre la décélération imposée par l'organe de freinage et la différence de vitesse ΔV sont représentées, dans le graphe de la figure 5, par des segments de droite parallèles mais décalés. Le segment de droite correspondant à la variation de décélération lorsque le conducteur appuie sur la touche "moins 22 est alors "au-dessus" de celui correspondant à la variation de décélération lorsque le conducteur appuie sur la touche "plus" 120.

Bien entendu, les deux lois liant la décélération à la différence de vitesse ΔV peuvent ne pas être strictement linéaires. Ce sont toutefois des fonctions croissantes.

On a illustré à la figure 6 un graphe illustrant la valeur du coefficient d'atténuation KV en fonction de la vitesse instantanée V du véhicule. Il a été vu plus haut que ce coefficient d'atténuation intervenait pour déterminer la décélération limite susceptible d'être imposée par le dispositif de régulation, et qu'il intervenait aussi dans le calcul du coefficient de proportionnalité entre la décélération imposée et la différence de vitesse ΔV.

Comme on peut le voir sur ce graphe, KV est constant et est égal à une valeur maximale KVₘₐₓ tant que la vitesse instantanée du véhicule est inférieure à un premier niveau de seuil V1. Au contraire, lorsque la vitesse du véhicule est supérieure à un second niveau de seuil V2, supérieur au premier niveau de seuil V1, KV est constant et égal à une valeur KVₘᵢₙ par exemple comprise entre 1/3 et 1/2. Entre V1 et V2, KV varie en décroissant linéairement de sa valeur KVₘₐₓ à sa valeur KVₘᵢₙ lorsque la vitesse augmente de V1 à V2.

Cette loi de variation de KV en fonction de la vitesse du véhicule est très simple, mais on peut aussi utiliser d'autres lois de variation, plus complexes et non linéaires, qui sont elles aussi décroisantes de la valeur 1 à la valeur 0.

Le dispositif de régulation de vitesse selon l'invention est donc particulièrement intéressant en ce qu'il permet, dans la plupart des cas, d'éviter au conducteur d'agir soit sur la pédale de frein, soit sur la pédale d'accélérateur, ce qui évite ainsi la mise hors service du dispositif de régulation. Le conducteur se trouve ainsi à même d'adapter la vitesse du véhicule de manière satisfaisante dans la plupart des conditions de circulation par simple appui sur les touches de commande 120, 122 du dispositif de régulation de vitesse. Le conducteur n'a donc plus à agir par l'intermédiaire des pédales 114, 116 que dans des situations dans lesquelles il souhaite obtenir une forte accélération ou une forte décélération du véhicule.

## Revendications

1. Système de freinage pour un véhicule automobile, du type comportant un organe de freinage (12, 112) qui impose au véhicule une décélération variable, du type dans lequel le conducteur du véhicule commande la décélération imposée par l'organe de freinage (12, 112) en actionnant une pédale de frein (14, 114), et du type comportant une unité d'assistance au freinage (18, 118) qui, dans une situation d'urgence déterminée en fonction de l'actionnement de la pédale (14, 114) par le conducteur, est susceptible de commander l'organe de freinage (12, 112) selon un mode de freinage automatique d'urgence au cours duquel la décélération est maximale,
**caractérisé en ce que** le système de freinage (10, 110) comporte un dispositif de détection d'obstacle (20, 120), et **en ce que**, lorsque le conducteur actionne la pédale de frein (14, 114) et qu'un obstacle est détecté, l'unité d'assistance (18, 118) commande l'organe de freinage (12, 112) selon un mode de freinage assisté au cours duquel la décélération (Dsf) est suffisante pour assurer l'immobilisation du véhicule avant l'obstacle.

2. Système de freinage selon la revendication 1, **caractérisé en ce que** l'unité de freinage assisté comporte un calculateur (18, 118) pour déterminer en permanence la décélération suffisante (Dsf) pour assurer l'immobilisation du véhicule avant un obstacle détecté.

3. Système de freinage selon la revendication 2, **caractérisé en ce que** le mode de freinage assisté n'est mis en oeuvre que lorsque la décélération suffisante (Dsf) est supérieure à une décélération de seuil (Do).

4. Système de contrôle selon la revendication 3, **caractérisé en ce que** la décélération de seuil (Do) est réglable.

5. Système de contrôle selon la revendication 4, **caractérisé en ce que** la décélération de seuil (Do) est déterminée de manière auto-adaptative par le calculateur (118).

6. Système de freinage selon l'une quelconque des revendications précédentes, **caractérisé en ce que** le mode de freinage assisté n'est mis en oeuvre que lorsque la pédale (114) est actionnée au-delà d'une course de seuil.

7. Système de freinage selon l'une quelconque des revendications précédentes, **caractérisé en ce que** le mode de freinage assisté n'est mis en oeuvre que lorsque la décélération (Dc) commandée par le conducteur est inférieure à la décélération suffisante (Dsf).

8. Système de freinage selon l'une quelconque des revendications précédentes, **caractérisé en ce que** le mode de freinage assisté est interrompu lorsque le conducteur cesse d'actionner la pédale de frein (14, 114).

9. Système de freinage selon l'une quelconque des revendications précédentes, **caractérisé en ce que** le mode de freinage assisté est interrompu lorsque plus aucun obstacle n'est détecté.

10. Système de freinage selon l'une quelconque des revendications précédentes, **caractérisé en ce que** le mode de freinage automatique d'urgence est mis en oeuvre lorsque, dans une situation d'urgence, aucun obstacle n'est détecté.

11. Système de freinage selon la revendication 10, **caractérisé en ce que**, lorsqu'un obstacle est détecté au cours d'un freinage automatique d'urgence, l'unité de freinage bascule vers le mode de freinage assisté.

12. Système de freinage selon l'une quelconque des revendications précédentes, **caractérisé en ce qu'**une situation d'urgence est détectée lorsque la vitesse d'actionnement de la pédale de frein par le conducteur dépasse une vitesse de seuil.

13. Véhicule automobile, du type comportant un organe de freinage (12, 112) qui impose au véhicule une décélération variable, du type dans lequel le conducteur du véhicule commande la décélération imposée par l'organe de freinage (12, 112) en actionnant une pédale de frein (14, 114), et du type comportant une unité d'assistance au freinage (18, 118) qui, dans une situation d'urgence déterminée en fonction de l'actionnement de la pédale (14, 114) par le conducteur, est susceptible de commander l'organe de freinage (12, 112) selon un mode de freinage automatique d'urgence au cours duquel la décélération est maximale,
**caractérisé en ce que** le système de freinage (10, 110) est conforme à l'une des revendications 1 à 12.

14. Véhicule automobile, du type comportant un organe de freinage (12, 112) qui impose au véhicule une décélération variable, du type dans lequel le conducteur du véhicule commande la décélération imposée par l'organe de freinage (12, 112) en actionnant une pédale de frein (14, 114), et du type comportant une unité d'assistance au freinage (18, 118) qui, dans une situation d'urgence déterminée en fonction de l'actionnement de la pédale (14, 114) par le conducteur, est susceptible de commander l'organe de freinage (12, 112) selon un mode de freinage automatique d'urgence au cours duquel la décélération est maximale,
**caractérisé en ce que** le système de freinage (10, 110) est conforme à l'une des revendications 1 à 12 et **en ce que** ledit véhicule comporte un dispositif de régulation de vitesses pouvant agir sur l'organe de freinage (12, 112) pour assurer une décélération du véhicule lorsque la vitesse instantanée (V) du véhicule est supérieur à la vitesse de consigne (Vc).

15. Véhicule automobile comportant d'une part un dispositif de régulation automatique de la vitesse, muni de moyens (114) qui permettent au conducteur de provoquer une accélération ou une décélération du véhicule en agissant sur la commande d'un moteur (110) d'entraînement du véhicule, suite à quoi le dispositif maintient le véhicule à une vitesse de consigne imposée par le conducteur, et d'autre part un organe de freinage (112) dont la commande permet au conducteur d'imposer au véhicule une décélération variable, **caractérisé en ce que** l'organe de freinage (112) appartient à un système de freinage conforme à l'une des revendications 1 à 12, et **en ce que** cet organe de freinage (112) peut également être actionné par le dispositif de régulation de vitesse lorsque la vitesse instantanée (V) du véhicule est supérieure à la vitesse de consigne (Vc), et par une unité d'assistance au freinage (118) en situation d'urgence.

16. Véhicule selon la revendication 14 ou 15 **caractérisé en ce que** le dispositif de régulation agit sur l'organe de freinage (112) lorsque la différence (ΔV) entre la vitesse instantanée (V) du véhicule et la vitesse de consigne (Vc) est supérieure à un premier niveau de seuil (S1).

17. Véhicule selon l'une des revendications 14 à 16, **caractérisé en ce que** le dispositif de régulation commande l'organe de freinage (112) de telle sorte que celui-ci impose au véhicule une décélération qui est déterminée par le dispositif de régulation en fonction de la vitesse instantanée (V) du véhicule et en fonction de la différence (ΔV) entre la vitesse instantanée (V) du véhicule et la vitesse de consigne (Vc).

18. Véhicule la revendication 17 **caractérisé en ce que** le dispositif de régulation commande l'organe de freinage (112) de telle sorte que celui-ci impose au véhicule une décélération qui augmente sensiblement proportionnellement à l'augmentation de la différence entre la vitesse instantanée (V) du véhicule et la vitesse de consigne (Vc).

19. Véhicule selon l'une des revendications 14 à 18, **caractérisé en ce que** la décélération commandée par l'organe de régulation ne peut excéder une décélération limite (Dₗᵢₘ) qui est le produit de la décélération maximale (Dₘₐₓ) permise par l'organe de freinage par un coefficient d'atténuation (KV) inférieur à 1.

20. Véhicule selon la revendication 19, **caractérisé en ce que** le coefficient d'atténuation (KV) diminue lorsque la vitesse instantanée (V) du véhicule augmente.

21. Véhicule selon l'une quelconque des revendications 14 à 20, **caractérisé en ce que** lorsque, au cours d'une décélération commandée par le dispositif de régulation agissant sur l'organe de freinage (112), le conducteur diminue la différence (ΔV) entre la vitesse instantanée (V) du véhicule et la vitesse de consigne (Vc) en augmentant cette dernière à une nouvelle valeur de consigne, le dispositif de régulation agit sur l'organe de freinage (112) de telle sorte que celui-ci impose au véhicule une nouvelle valeur de décélération qui est inférieure d'au moins un incrément (δ) à la valeur de décélération précédente.

22. Véhicule selon l'une quelconque des revendications 14 à 21, **caractérisé en ce que** lorsque, au cours d'une décélération commandée par le dispositif de régulation agissant sur l'organe de freinage (112), le conducteur diminue la différence (ΔV) entre la vitesse instantanée (V) du véhicule et la vitesse de consigne (Vc) en augmentant cette dernière à une nouvelle valeur de consigne, le dispositif de régulation cesse d'agir sur l'organe de freinage (112) lorsque la différence (ΔV) entre la vitesse instantanée (V) du véhicule et la vitesse de consigne (Vc) devient inférieure à un second niveau de seuil (S2).

23. Véhicule selon la revendication 22 prise en combinaison avec la revendication 16, **caractérisé en ce que** le second niveau de seuil (S2) de différence (ΔV) entre la vitesse instantanée (V) du véhicule et la vitesse de consigne (Vc) est supérieur au premier niveau de seuil (S1).

24. Véhicule selon l'une quelconque des revendications 14 à 23, **caractérisé en ce que** le conducteur commande le dispositif de régulation à l'aide de deux moyens d'interface (120, 122) dont un premier permet (120) d'augmenter la vitesse de consigne (Vc) et dont un second (122) permet de diminuer la vitesse de consigne (Vc).

25. Véhicule selon l'une quelconque des revendications 14 à 24, **caractérisé en ce qu'**il comporte un moyen de visualisation (126) de la vitesse de consigne (Vc).

26. Dispositif selon la revendication 25, **caractérisé en ce que** le moyen de visualisation (126) qui affiche la vitesse de consigne (Vc) est agencé à proximité d'un second moyen de visualisation (128) de la vitesse instantanée du véhicule (V).

27. Véhicule selon la revendication 26, **caractérisé en ce que** les deux moyens de visualisation (126, 128) sont de type à affichage analogique.

## Patentansprüche

1. Bremsanlage für ein Kraftfahrzeug von der Art, welche eine Bremseinrichtung (12, 112) aufweist, die dem Fahrzeug eine variable Verzögerung auferlegt, von der Art, in welcher der Fahrer des Fahrzeugs die Verzögerung, welche durch die Bremseinrichtung (12, 112) auferlegt wird, steuert unter Betätigen eines Bremspedals (14, 114), und von der Art, welche eine Bremsassistenzeinheit (18, 118) aufweist, welche in einer Notsituation, welche in Abhängigkeit von der Betätigung des Pedals (14, 114) durch den Fahrer bestimmt wird, im Stande ist, die Bremseinrichtung (12, 112) gemäß einem automatischen Notbremsmodus zu steuern, in welchem die Verzögerung maximal ist,
**dadurch gekennzeichnet, dass**
die Bremsanlage (10, 110) eine Vorrichtung (20, 120) zur Detection von Hindernissen aufweist und dass die Assistenzeinheit (18, 118) die Bremseinrichtung (12, 112) gemäß einem assistierten Bremsmodus steuert, wenn der Fahrer das Bremspedal (14, 114) betätigt und ein Hindernis detektiert wird, in dessen Verlauf die Verzögerung (Dsf) ausreichend ist, um das Anhalten des Fahrzeugs vor dem Hindernis sicher zu stellen.

2. Bremsanlage nach Anspruch 1, **dadurch gekennzeichnet, dass** die assistierte Bremseinheit einen Rechner (18, 118) aufweist zum permanenten Bestimmen der ausreichenden Verzögerung (Dsf) zum Sicherstellen des Anhaltens des Fahrzeugs vor einem detektierten Hindernis.

3. Bremsanlage nach Anspruch 2, **dadurch gekennzeichnet, dass** der assistierte Bremsmodus nur eingesetzt wird, wenn die ausreichende Verzögerung (Dsf) größer ist als eine Grenz-Verzögerung (Do).

4. Steueranlage gemäß Anspruch 3, **dadurch gekennzeichnet, dass** die Grenz-Verzögerung (Do) einstellbar ist.

5. Steueranlage nach Anspruch 4, **dadurch gekennzeichnet, dass** die Grenzverzögerung (Do) in selbst-anpassender Weise durch den Rechner (118) bestimmt wird.

6. Bremsanlage nach irgendeinem der vorherigen Ansprüche, **dadurch gekennzeichnet, dass** der assistierte Bremsmodus nur eingesetzt wird, wenn das Pedal (114) jenseits von einem Grenzweg betätigt wird.

7. Bremsanlage nach irgendeinem der vorherigen Ansprüche, **dadurch gekennzeichnet, dass** der assistierte Bremsmodus nur eingesetzt wird, wenn die Verzögerung (Dc), welche durch den Fahrer gesteuert wird, geringer als die ausreichende Verzögerung (Dsf) ist.

8. Bremsanlage nach irgendeinem der vorherigen Ansprüche, **dadurch gekennzeichnet, dass** der assistierte Bremsmodus unterbrochen wird, wenn der Fahrer aufhört, das Bremspedal (14, 114) zu betätigen.

9. Bremsanlage nach irgendeinem der vorherigen Ansprüche, **dadurch gekennzeichnet, dass** der assistierte Bremsmodus unterbrochen wird, wenn überhaupt kein Hindernis mehr detektiert wird.

10. Bremsanlage nach irgendeinem der vorherigen Ansprüche, **dadurch gekennzeichnet, dass** der automatische Notbremsmodus eingesetzt wird, wenn in einer Notsituation kein Hindernis detektiert wird.

11. Bremsanlage nach Anspruch 10, **dadurch gekennzeichnet, dass**, wenn ein Hindernis im Verlauf einer automatischen Notbremsung detektiert wird, die Bremseinheit zu dem assistierten Bremsmodus kippt.

12. Bremsanlage nach irgendeinem der vorherigen Ansprüche, **dadurch gekennzeichnet, dass** eine Notsituation detektiert wird, wenn die Betätigungsgeschwindigkeit des Bremspedals durch den Fahrer einen Geschwindigkeitsgrenzwert übersteigt.

13. Kraftfahrzeug von der Art, welches eine Bremseinrichtung (12, 112) aufweist, welche dem Fahrzeug eine variable Verzögerung auferlegt, von der Art, in welcher der Fahrer des Fahrzeugs die auferlegte Verzögerung durch die Bremseinrichtung (12, 112) steuert unter Betätigen eines Bremspedals (14, 114), und von der Art, welche eine Bremsassistenzeinheit (18, 118) aufweist, welche in einer Notsituation, welche in Abhängigkeit von der Betätigung des Pedals (14, 114) durch den Fahrer bestimmt wird, im Stande ist, die Bremseinrichtung (12, 112) gemäß einem automatischen Notbremsmodus zu steuern, in dessen Verlauf die Verzögerung maximal ist, **dadurch gekennzeichnet, dass**
die Bremsanlage (10, 110) entsprechend einem der Ansprüche 1 bis 12 ausgebildet ist.

14. Kraftfahrzeug von der Art, welches eine Bremseinrichtung (12, 112) aufweist, welche dem Fahrzeug eine variable Verzögerung auferlegt, von der Art, in welcher der Fahrer des Fahrzeugs die auferlegte Verzögerung durch die Bremseinrichtung (12, 112) steuert unter Betätigen eines Bremspedals (14, 114) und von der Art, welche eine Bremsassistenzeinheit (18, 118) aufweist, welche in einer Notsituation, die in Abhängigkeit von der Betätigung des Pedals (14, 114) durch den Fahrer bestimmt wird, im Stande ist, die Bremseinrichtung (12, 112) gemäß einem automatischen Notbremsmodus zu steuern, im Verlaufe dessen die Verzögerung maximal ist, **dadurch gekennzeichnet, dass** die Bremsanlage (10, 110) entsprechend einem der Ansprüche 1 bis 12 ausgebildet ist und dass das Fahrzeug eine Geschwindigkeitsregulierungsvorrichtung aufweist, welche auf die Bremseinrichtung (12, 112) wirken kann, um eine Verzögerung des Fahrzeugs sicher zu stellen, wenn die momentane Geschwindigkeit (V) des Fahrzeugs größer als die Einstellgeschwindigkeit (Vc) ist.

15. Kraftfahrzeug, welches einerseits eine automatische Regulierungsvorrichtung der Geschwindigkeit aufweist, die mit Mitteln (114) ausgestattet ist, welche es dem Fahrer ermöglichen, eine Beschleunigung oder eine Verzögerung des Fahrzeugs unter Einwirken auf die Steuerung eines Motors (110) eines Antriebs des Fahrzeugs hervorzurufen, worauf die Vorrichtung das Fahrzeug bei einer Einstellgeschwindigkeit, die durch den Fahrer auferlegt ist, hält, und andererseits eine Bremseinrichtung (112), deren Steuerung es dem Fahrer ermöglicht, dem Fahrzeug eine variable Verzögerung aufzuerlegen, **dadurch gekennzeichnet, dass** die Bremseinrichtung (112) zu einer Bremsanlage gemäß einem der Ansprüche 1 bis 12 gehört und dass diese Bremsanlage (112) ebenfalls durch die Geschwindigkeitsregulierungsvorrichtung betätigt werden kann, wenn die momentane Geschwindigkeit (V) des Fahrzeugs höher ist als die Einstellgeschwindigkeit (Vc) und durch eine Bremsassistenzeinheit (118) in einer Notsituation.

16. Fahrzeug gemäß Anspruch 14 oder 15, **dadurch gekennzeichnet, dass** die Regulierungsvorrichtung auf die Bremseinrichtung (112) einwirkt, wenn die Differenz (ΔV) zwischen der momentanen Geschwindigkeit (V) des Fahrzeugs und der Einstellgeschwindigkeit (Vc) größer als ein Grenzniveau (S1) ist.

17. Fahrzeug nach einem der Ansprüche 14 bis 16, **dadurch gekennzeichnet, dass** die Regulierungsvorrichtung die Bremseinrichtung (112) in solch einer Art und Weise steuert, dass diese dem Fahrzeug eine Verzögerung auferlegt, die durch die Regulierungsvorrichtung in Abhängigkeit von der momentanen Geschwindigkeit (V) des Fahrzeugs und in Abhängigkeit von der Differenz (ΔV) zwischen der momentanen Geschwindigkeit (V) des Fahrzeugs und der Einstellgeschwindigkeit (Vc) bestimmt wird.

18. Fahrzeug nach Anspruch 17, **dadurch gekennzeichnet, dass** die Regulierungsvorrichtung die Bremseinrichtung (112) in solch einer Art und Weise steuert, dass diese dem Fahrzeug eine Verzögerung auferlegt, welche im Wesentlichen proportional zu dem Anstieg der Differenz zwischen der momentanen Geschwindigkeit (V) des Fahrzeugs und der Einstellgeschwindigkeit (Vc) ansteigt.

19. Fahrzeug nach einem der Ansprüche 14 bis 18, **dadurch gekennzeichnet, dass** die Verzögerung, welche durch die Regulierungseinrichtung gesteuert wird, nicht eine Grenzverzögerung (Dₗᵢₘ) übersteigen kann, welche das Produkt der maximalen Verzögerung (Dₘₐₓ) ist, die durch die Bremseinrichtung erlaubt wird, mal einem Dämpfungskoeffizient (KV) geringer als 1 ist.

20. Fahrzeug nach Anspruch 19, **dadurch gekennzeichnet, dass** der Dämpfungskoeffizient (KV) abnimmt, wenn die momentane Geschwindigkeit (V) des Fahrzeugs ansteigt.

21. Fahrzeug nach irgendeinem der Ansprüche 14 bis 20, **dadurch gekennzeichnet, dass**, wenn im Verlaufe einer Verzögerung, welche durch die Regulierungsvorrichtung gesteuert wird, die auf die Bremseinrichtung (112) einwirkt, der Fahrer die Differenz (ΔV) zwischen der momentanen Geschwindigkeit (V) des Fahrzeugs und der Einstellgeschwindigkeit (Vc) verringert unter Erhöhen dieser letzteren auf einen neuen Einstellwert, die Regulierungsvorrichtung auf die Bremseinrichtung (112) in solch einer Art und Weise wirkt, dass diese dem Fahrzeug einen neuen Verzögerungswert auferlegt, welcher um mindestens ein Inkrement (δ) geringer ist als der vorherige Verzögerungswert.

22. Fahrzeug nach irgendeinem der Ansprüche 14 bis 21, **dadurch gekennzeichnet, dass**, wenn im Verlaufe einer Verzögerung, welche durch die Regulierungsvorrichtung gesteuert wird, die auf die Bremseinrichtung (112) wirkt, der Fahrer die Differenz (ΔV) zwischen der momentanen Geschwindigkeit (V) des Fahrzeugs und der Einstellgeschwindigkeit (Vc) verringert unter Erhöhen dieser letzteren auf einen neuen Einstellwert, die Regulierungsvorrichtung aufhört, auf die Bremseinrichtung (112) zu wirken, wenn die Differenz (ΔV) zwischen der momentanen Geschwindigkeit (V) des Fahrzeugs und der Einstellgeschwindigkeit (Vc) geringer als ein zweites Grenzniveau (S2) wird.

23. Fahrzeug nach Anspruch 22 in Kombination mit Anspruch 16, **dadurch gekennzeichnet, dass** das zweite Schwellenniveau (S2) einer Differenz (ΔV) zwischen der momentanen Geschwindigkeit (V) des Fahrzeugs und der Einstellgeschwindigkeit (Vc) höher als das erste Grenzniveau (S1) ist.

24. Fahrzeug nach irgendeinem der Ansprüche 14 bis 23, **dadurch gekennzeichnet, dass** der Fahrer die Regulierungsvorrichtung mit Hilfe von zwei Schnittstellenmitteln (120, 122) steuert, von denen ein erstes (120) ermöglicht, die Einstellgeschwindigkeit (Vc) zu erhöhen, und von denen ein zweites (122) ermöglicht, die Einstellgeschwindigkeit (Vc) zu verringern.

25. Fahrzeug nach irgendeinem der Ansprüche 14 bis 24, **dadurch gekennzeichnet, dass** es ein Visualisierungsmittel (126) der Einstellgeschwindigkeit (Vc) aufweist.

26. Vorrichtung nach Anspruch 25, **dadurch gekennzeichnet, dass** das Visualisierungsmittel (126), welches die Einstellgeschwindigkeit (Vc) anzeigt, in der Nähe von einem zweiten Visualisierungsmittel (128) der momentanen Geschwindigkeit des Fahrzeugs (V) angeordnet ist.

27. Fahrzeug nach Anspruch 26, **dadurch gekennzeichnet, dass** die zwei Visualisierungsmittel (126, 128) vom analogen Anzeigentyp sind.

## Claims

1. A braking system for an automobile vehicle, of the type comprising a braking member (12, 112) which imposes a variable deceleration on the vehicle, of the type in which the vehicle driver controls the deceleration imposed by the braking member (12, 112) by actuating a brake pedal (14, 114) and of the type comprising a braking assistance unit (18, 118) which, in an emergency situation determined as a function of the actuation of the pedal (14, 114) by the driver, is able to control the braking member (12, 112) in accordance with an automatic emergency braking mode during which deceleration is maximal, **characterised in that** the braking system (10, 110) comprises an obstacle detection device (20, 120) and **in that**, when the driver actuates the brake pedal (14, 114) and an obstacle is detected, the assistance unit (18, 118) controls the braking member (12, 112) in accordance with an assisted braking mode during which the deceleration (Dsf) is sufficient to ensure that the vehicle comes to a halt prior to the obstacle.

2. A braking system as claimed in claim 1, **characterised in that** the assisted braking unit comprises a computer (18, 118) in order permanently to determine the deceleration sufficient (Dsf) to ensure that the vehicle comes to a halt prior to a detected obstacle.

3. A braking system as claimed in claim 2, **characterised in that** the assisted braking method is implemented only when the sufficient deceleration (Dsf) is greater than a threshold deceleration (Do).

4. A control system as claimed in claim 3, **characterised in that** the threshold deceleration (Do) is adjustable.

5. A control system as claimed in claim 4, **characterised in that** the threshold deceleration (Do) is determined in an self-adaptive manner by the computer (118).

6. A braking system as claimed in any one of the preceding claims, **characterised in that** the assisted braking mode is implemented only when the pedal (114) is actuated beyond a threshold stroke.

7. A braking system as claimed in any one of the preceding claims, **characterised in that** the assisted braking mode is implemented only when the deceleration (Dc) controlled by the driver is lower than the sufficient deceleration (Dsf).

8. A braking system as claimed in any one of the preceding claims, **characterised in that** the assisted braking mode is discontinued when the driver stops actuating the brake pedal (14, 114).

9. A braking system as claimed in any one of the preceding claims, **characterised in that** the assisted braking mode is discontinued when no further obstacle is detected.

10. A braking system as claimed in any one of the preceding claims, **characterised in that** the automatic emergency braking mode is implemented when, in an emergency situation, no obstacle has been detected.

11. A braking system as claimed in claim 10, **characterised in that**, when an obstacle is detected during automatic emergency braking, the braking unit switches to the assisted braking mode.

12. A braking system as claimed in any one of the preceding claims, **characterised in that** an emergency situation is detected when the speed of actuation of the brake pedal by the driver exceeds a threshold speed.

13. An automobile vehicle, of the type comprising a braking member (12, 112) which imposes a variable deceleration on the vehicle, of the type in which the vehicle driver controls the deceleration imposed by the braking member (12, 112) by actuating a brake pedal (14, 114) and of the type comprising a braking assistance unit (18, 118) which, in an emergency situation determined as a function of the actuation of the pedal (14, 114) by the driver, is able to control the braking member (12, 112) in accordance with an automatic emergency braking mode during which deceleration is maximal, **characterised in that** the braking system (10, 110) is as claimed in one of claims 1 to 12.

14. An automobile vehicle, of the type comprising a braking member (12, 112) which imposes a variable deceleration on the vehicle, of the type in which the vehicle driver controls the deceleration imposed by the braking member (12, 112) by actuating a brake pedal (14, 114) and of the type comprising a braking assistance unit (18, 118) which, in an emergency situation determined as a function of the actuation of the pedal (14, 114) by the driver, is able to control the braking member (12, 112) in accordance with an automatic emergency braking mode during which deceleration is maximal, **characterised in that** the braking system (10, 110) is as claimed in one of claims 1 to 12 and **in that** the vehicle comprises a speed regulation device able to act on the braking member (12, 112) to ensure a deceleration of the vehicle when the instantaneous speed (V) of the vehicle is greater than the reference speed (Vc).

15. An automobile vehicle comprising, on the one hand, an automatic speed regulation device provided with means (114) enabling the driver to accelerate or decelerate the vehicle by acting on the control of an engine (110) driving the vehicle, following which the device maintains the vehicle at a reference speed set by the driver and, on the other hand, a braking member (112) whose control enables the driver to impose a variable deceleration on the vehicle, **characterised in that** the braking member (112) is part of a braking system as claimed in one of claims 1 to 12, and **in that** this braking member (112) may also be actuated by the speed regulation device when the instantaneous speed (V) of the vehicle is greater than the reference speed (Vc) and by a braking assistance unit (118) in an emergency situation.

16. A vehicle as claimed in claim 14 or 15, **characterised in that** the regulation device acts on the braking member (112) when the difference (ΔV) between the instantaneous speed (V) of the vehicle and the reference speed (Vc) is greater than a first threshold level (S1)

17. A vehicle as claimed in one of claims 14 to 16, **characterised in that** the regulation device controls the braking member (112) such that the latter imposes a deceleration on the vehicle which is determined by the regulation device as a function of the instantaneous speed (V) of the vehicle and as a function of the difference (ΔV) between the instantaneous speed (V) of the vehicle and the reference speed (Vc).

18. A vehicle as claimed in claim 17, **characterised in that** the regulation device controls the braking member (112) such that the latter imposes a deceleration on the vehicle which increases substantially proportionally to the increase in the difference between the instantaneous speed (V) of the vehicle and the reference speed (Vc).

19. A vehicle as claimed in one of claims 14 to 18, **characterised in that** the deceleration controlled by the regulation member cannot exceed a limit deceleration (Dₗᵢₘ) which is the product of the maximum deceleration (Dₘₐₓ) permitted by the braking member and a coefficient of attenuation (KV) lower than 1.

20. A vehicle as claimed in claim 19, **characterised in that** the coefficient of attenuation (KV) decreases when the instantaneous speed (V) of the vehicle increases.

21. A vehicle as claimed in any one of claims 14 to 20, **characterised in that** when, during a deceleration controlled by the regulation device acting on the braking member (112), the driver reduces the difference (ΔV) between the instantaneous speed (V) of the vehicle and the reference speed (Vc) by increasing the latter to a new reference value, the regulation device acts on the braking member (112) such that the latter imposes a new deceleration value on the vehicle which is lower by at least an increment (δ) with respect to the preceding deceleration value.

22. A vehicle as claimed in any one of claims 14 to 21, **characterised in that** when, during a deceleration controlled by the regulation device acting on the braking member (112), the driver reduces the difference (ΔV) between the instantaneous speed (V) of the vehicle and the reference speed (Vc) by increasing the latter to a new reference value, the regulation device stops acting on the braking member (112) when the difference (ΔV) between the instantaneous speed (V) of the vehicle and the reference speed (Vc) becomes lower than a second threshold level (S2).

23. A vehicle as claimed in claim 22 in combination with claim 16, **characterised in that** the second threshold level (S2) of difference (ΔV) between the instantaneous speed (V) of the vehicle and the reference speed (Vc) is greater than the first threshold level (S1).

24. A vehicle as claimed in any one of claims 14 to 23, **characterised in that** the driver controls the regulation device by means of two interface means (120, 122), the first of which (120) makes it possible to increase the reference speed (Vc) and the second of which (122) makes it possible to decrease the reference speed (Vc).

25. A vehicle as claimed in any one of claims 14 to 24, **characterised in that** it comprises a display means (126) for the reference speed (Vc).

26. A device as claimed in claim 25, **characterised in that** the display means (126) which displays the reference speed (Vc) is disposed in the vicinity of a second display means (128) for the instantaneous speed of the vehicle (V).

27. A vehicle as claimed in claim 26, **characterised in that** the two display means (126, 128) are of the analog display type.
